# EUROPEAN PATENT APPLICATION

(11) **EP 1 289 311 A1**
(43) Date of publication of application: **05.03.2003**
(21) Application number: 01306768.1
(22) Date of filing: 08.08.2001
(51) Int. Cl.: H04N 9/31

(54) **Projection display with dichroic beam splitters**

(71) Applicant: Prokia Technology Co., Ltd., Tainan Hsien (TW)
(72) Inventor: Chuang, Fu-Ming, Hsin-Chu Hsien (TW); Tsai, Han-Wen, Hsin-Chu Hsien, Taiwan (TW)
(74) Representative: Alton, Andrew

(57) **Abstract**

In a projection display (3, 4, 5), input light is separated by a polarization beam splitter (32, 44, 54) into a first color component (21,401), which is received by a first dichroic beam splitter (33, 451, 551) and processed by a first light modulator (34, 461, 561), and second and third color components (22,23,402,403), which are received by a second dichroic beam splitter (35, 452, 552) and processed by second and third light modulators (36, 37, 462, 463, 562, 563), respectively.

## Description

The invention relates to a projection display, more particularly to a projection display with two dichroic beam splitters.

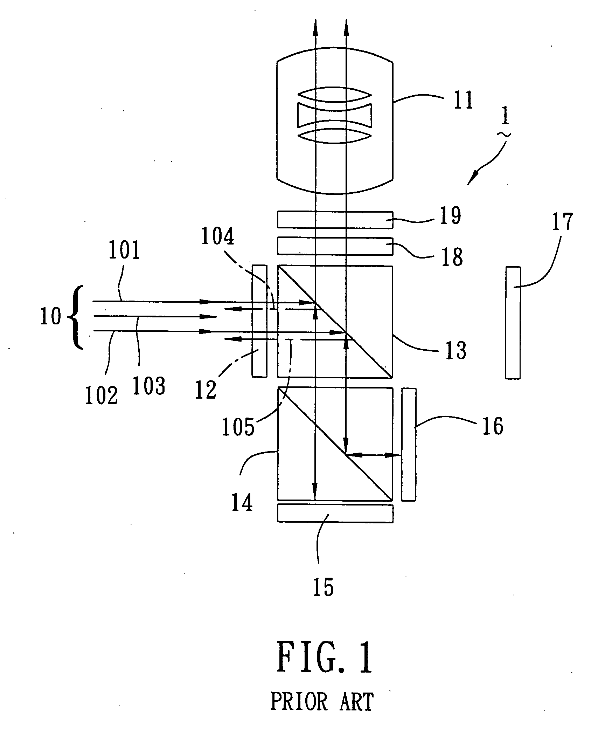

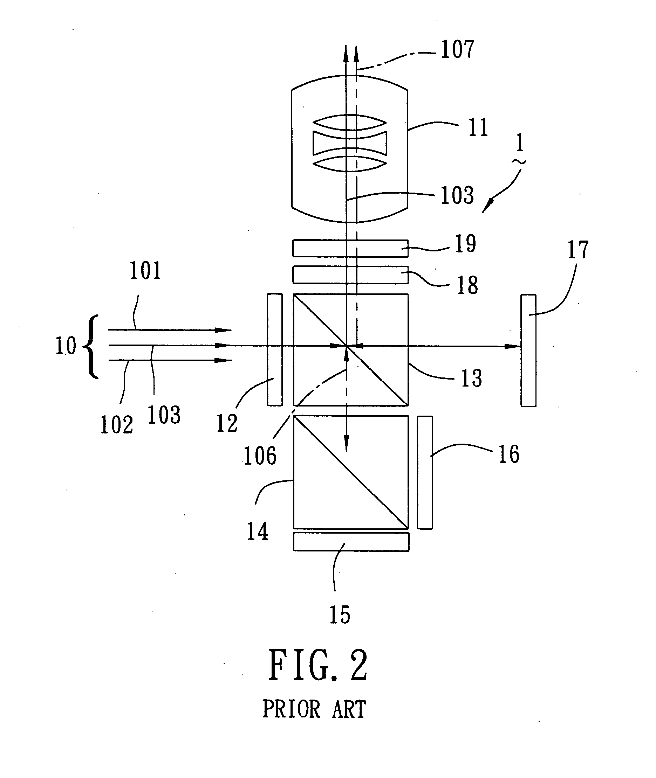

Referring to Figures 1 and 2, in a conventional single-lens projection display 1, an input light beam 10 from an illuminating apparatus (not shown) is processed before providing the same to a projection lens 11 so as to generate an output image. The light beam 10 is generally white light of a predetermined polarization state, such as S-polarization state, and contains first, second and third color components 101, 102, 103. The projection display 1 includes a first light polarization selector 12, a polarization beam splitter prism 13, a dichroic beam splitter prism 14, a first light modulator 15, a second light modulator 16, a third light modulator 17, a second light polarization selector 18, and a polarizer 19. The first, second and third light modulators 15, 16, 17 are typically reflective light valves.

Each of the first and second light polarization selectors 12, 18, such as the ColorSelect™ filter products available from ColorLink Inc., serves to convert the polarization state of a predetermined color component, without altering the polarization state of the other color components. In the projection display 1 of Figures 1 and 2, the polarization state of the third color component 103 is changed from the S-polarization state to a P-polarization state, whereas the current polarization state of the first and second color components 101, 102 remains unaltered, after the color components 101, 102, 103 pass through the first and second light polarization selectors 12, 18.

The polarization beam splitter prism 13 receives the S-polarized first and second color components 101, 102 from the first light polarization selector 12 at a first side thereof, and reflects the same in a transverse direction such that the first and second color components 101, 102 pass through a second side thereof. With reference to Figure 2, due to the P-polarization characteristics of the polarization beam splitter prism 13, a large portion (about 90%) of the P-polarized third color component 103 from the first light polarization selector 12 will pass through a third side of the polarization beam splitter prism 13 opposite to the first side. A small portion (about 10%) of the third color component 103 will, however, be reflected by the polarization beam splitter prism 13 to pass through the second side thereof, thus resulting in a light leakage component 106.

The dichroic beam splitter prism 14 is disposed adjacent to the second side of the polarization beam splitter prism 13, and receives the first and second color components 101, 102 and the light leakage component 106 therefrom. As shown in Figure 1, the first color component 101 passes directly through the dichroic beam splitter prism 14, whereas the second color component 102 is reflected by the dichroic beam splitter prism 14 in a transverse direction.

The first and second light modulators 15, 16 are disposed adjacent to the dichroic beam splitter prism 14 so as to receive the first and second color components 101, 102 therefrom. The first and second light modulators 15, 16 respectively modulate the first and second color components 101, 102 and change the polarization state of the corresponding first or second color component 101, 102 from the S-polarization state to the P-polarization state when the first and second light modulators 15, 16 are activated. The first and second light modulators 15, 16 reflect the corresponding color component back to the dichroic beam splitter prism 14 for reception by the polarization beam splitter prism 13.

Due to the P-polarization characteristics of the polarization beam splitter prism 13, a large portion (about 90%) of the reflected first and second color components 101, 102 will pass through a fourth side of the polarization beam splitter prism 13 opposite to the second side, and through the second light polarization selector 18 before reaching the polarizer 19. A small portion (about 10%) of the reflected first and second color components 101, 102 will, however, be directed by the polarization beam splitter prism 13 to pass through the first side thereof, i.e. toward the first light polarization selector 12, thus resulting in light leakage components 104, 105.

Referring once again to Figure 2, the third light modulator 17 is disposed adjacent to the third side of the polarization beam splitter prism 13 so as to receive the third light component 103 therefrom. The third light modulator 17 modulates the third color component 103, and changes the polarization state of the third color component 103 from the P-polarization state to the S-polarization state when the third light modulator 17 is activated. The third light modulator 17 reflects the third color component 103 back to the polarization beam splitter prism 13. The reflected S-polarized third color component 103 is then directed by the polarization beam splitter prism 13 so as to pass through the fourth side thereof for reception by the second light polarization selector 18, thereby changing the polarization state thereof from the S-polarization state back to the P-polarization state before the reflected third color component 103 reaches the polarizer 19.

The polarizer 19 permits only pure P-polarized color components to pass therethrough, and absorbs S-polarized color components. The first, second and third color components 101, 102, 103 from the polarizer 19 are recombined as they pass through the projection lens 11 for projecting a color image on a display screen (not shown).

As shown in Figure 1, because the light leakage components 104, 105 associated with the first and second color components 101, 102 do not reach the projection lens 11, the quality of the output image from the projection lens 11 will not be adversely affected thereby. However, with reference to Figure 2, the light leakage component 106 that is associated with the third color component 103 and that is directed by the polarization beam splitter prism 13 to pass through the second side thereof, i.e. toward the dichroic beam splitter prism 14, might be provided to one of the first and second light modulators 15, 16, where it can undesirably combine with one of the first and second color components 101, 102. Since the polarizer 19 of the projection display 1 is only capable of absorbing light of a predetermined polarization state, in this case -- the S-polarization state, the polarizer 19 will be unable to absorb the P-polarized light leakage component 106. As such, the light leakage component 106 will reach the projection lens 11 and will reduce the contrast and quality of the output image from the projection lens 11.

Moreover, when the third light modulator 17 is deactivated, such as when the third color component 103 is not required in the output image from the projection lens 11, in view of the P-polarization characteristics of the polarization beam splitter prism 13, a small portion (about 10%) of the P-polarized third color component 103 will be reflected by the polarization beam splitter prism 13 to pass through the fourth side thereof, i.e. toward the projection lens 11, thereby resulting in a light leakage component 107, as best shown in Figure 2. Likewise, as the polarizer 19 of the projection display 1 is unable to absorb the P-polarized light leakage component 107, the light leakage component 107 will reach the projection lens 11 such that a weak yet noticeable portion of the third color component 103 will be undesirably introduced into the output image from the projection lens 11.

Therefore, the main object of the present invention is to provide a projection display with two dichroic beam splitters so as to be capable of overcoming the aforesaid drawbacks of the prior art to enhance both contrast and output image quality.

According to the present invention, a projection display is adapted to process an input light beam and to provide an output light beam to a projection lens. The input light beam includes first, second and third color components, each of which has a first polarization state. The projection display comprises:
a first polarization state converter adapted to receive the input light beam and to convert the polarization state of the first color component to a second polarization state different from the first polarization state;
a polarization beam splitter disposed adjacent to the first polarization state converter so as to receive the input light beam therefrom, the polarization beam splitter separating the first color component from the second and third color components;
a first dichroic beam splitter disposed adjacent to the polarization beam splitter and permitting the first color component to pass therethrough;
a first light modulator disposed adjacent to the first dichroic beam splitter and receiving the first color component therefrom, the first light modulator modulating the first color component and changing the polarization state of the first color component back to the first polarization state when activated, the first light modulator reflecting the first color component back to the first dichroic beam splitter;
a second dichroic beam splitter disposed adjacent to the polarization beam splitter and receiving the second and third color components therefrom, the second dichroic beam splitter separating the second color component from the third color component;
a second light modulator disposed adjacent to the second dichroic beam splitter and receiving the second color component therefrom, the second light modulator modulating the second color component and changing the polarization state of the second color component to the second polarization state when activated, the second light modulator reflecting the second color component back to the second dichroic beam splitter; and
a third light modulator disposed adjacent to the second dichroic beam splitter and receiving the third color component therefrom, the third light modulator modulating the third color component and changing the polarization state of the third color component to the second polarization state when activated, the third light modulator reflecting the third color component back to the second dichroic beam splitter.

The polarization beam splitter receives from the first dichroic beam splitter the first color component reflected by the first light modulator, further receives from the second dichroic beam splitter the second and third color components reflected by the second and third light modulators, and is adapted to direct the first, second and third color components received from the first and second dichroic beam splitters to the projection lens.

Other features and advantages of the present invention will become apparent in the following detailed description of the preferred embodiment with reference to the accompanying drawings, of which:
Figure 1 is a schematic view to illustrate how S-polarized first and second color components of an input light beam from an illuminating apparatus are processed by a conventional single-lens projection display;
Figure 2 is a schematic view to illustrate how a P-polarized third color component of the input light beam from the illuminating apparatus is processed by the conventional single-lens projection display;
Figure 3 is a schematic view to illustrate how a first color component of an input light beam from an illuminating apparatus is processed by the preferred embodiment of a projection display according to the present invention, with a corresponding first light modulator in an activated state;
Figure 4 is a schematic view to illustrate how the first color component of the input light beam is processed by the preferred embodiment, with the corresponding first light modulator in a deactivated state;
Figure 5 is a schematic view to illustrate how second and third color components of the input light beam from the illuminating apparatus are processed by the preferred embodiment, with corresponding second and third light modulators in an activated state;
Figure 6 is a schematic view to illustrate how the second and third color components of the input light beam are processed by the preferred embodiment, with the corresponding second and third light modulators in a deactivated state;
Figure 7 is a schematic view of the second preferred embodiment of a projection display according to the present invention; and
Figure 8 is a schematic view of the third preferred embodiment of a projection display according to the present invention.

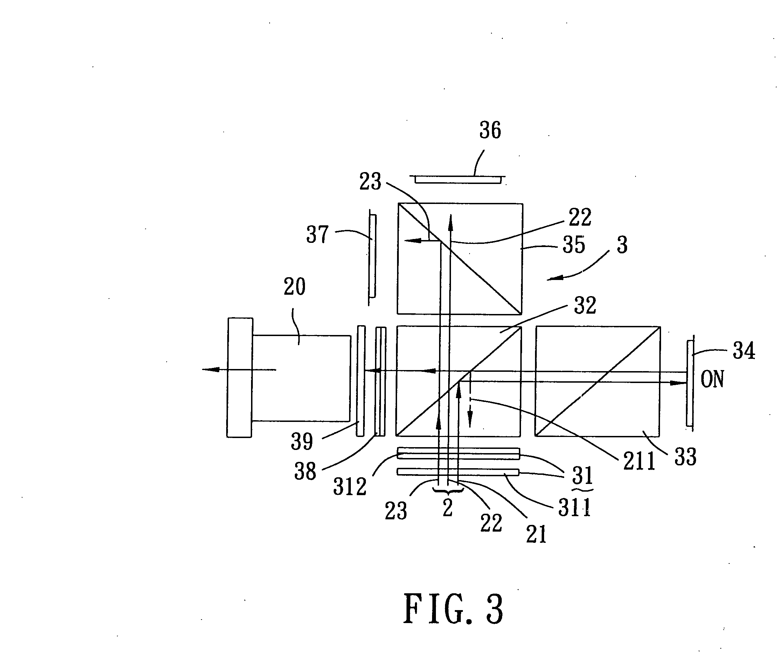

Referring to Figure 3, in the first preferred embodiment of a projection display 3 according to the present invention, an input light beam 2 from an illuminating apparatus (not shown) is processed in order to provide an output light beam to a projection lens 20 so as to generate an output image. The input light beam 2 is generally white light that contains a first color component 21, a second color component 22, and a third color component 23. In this embodiment, the first, second and third color components 21, 22, 23 are green, red and blue color components, respectively. Moreover, in the preferred embodiment, each of the first, second and third color components 21, 22, 23 has a P-polarization state coming from the illuminating apparatus, and an S-polarization state upon reaching the projection lens 20.

The projection display 3 includes a polarization state converting device 31, a polarization beam splitter prism 32, a first dichroic beam splitter prism 33, a first light modulator 34, a second dichroic beam splitter prism 35, a second light modulator 36, a third light modulator 37, a light polarization selector 38, and a polarizer 39. The first, second and third light modulators 34, 36, 37 are preferably reflective light valves.

The polarization state converting device 31 receives the input light beam 2, and converts the polarization state of the first color component 21 from the first or P-polarization state to the second or S-polarization state. In this embodiment, the polarization state converting device 31 includes a polarizer 311 that absorbs S-polarized light and that permits only pure P-polarized light to pass therethrough, and a light polarization selector 312 for converting the polarization state of the first color component 21 from the P-polarization state to the S-polarization state.

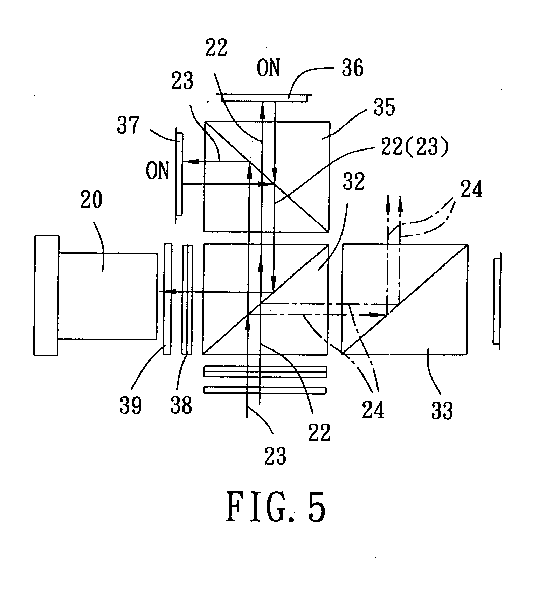

The polarization beam splitter prism 32 has a first side to be disposed adjacent to the projection lens 20, a second side disposed adjacent to the polarization state converting device 31, a third side opposite to the first side, and a fourth side opposite to the second side. The polarization beam splitter prism 32 receives the input light beam from the polarization state converting device 31 at the second side thereof, and separates the input light beam into the S-polarized first color component 21, which is reflected by the polarization beam splitter prism 32 in a transverse direction away from the projection lens 20 so as to pass through the third side thereof, and the P-polarized second and third color components 22, 23. With further reference to Figure 5, due to the characteristics of the polarization beam splitter prism 32, a large portion (about 90%) of the P-polarized second and third color components 22, 23 will be permitted to pass through the fourth side of the polarization beam splitter prism 32. A small portion (about 10%) of the P-polarized second and third color components 22, 23 will, however, be reflected in a transverse direction, thereby resulting in light leakage components 24 that pass through the third side of the polarization beam splitter prism 32.

Referring again to Figure 3, the first dichroic beam splitter prism 33, which is disposed adjacent to the third side of the polarization beam splitter prism 32, permits light of a predetermined color to pass therethrough, and reflects light of other colors. In this embodiment, the first dichroic beam splitter prism 33 permits the first color component 21 from the polarization beam splitter prism 32 to pass therethrough, and reflects the light leakage components 24 that are associated with the second and third color components 22, 23 in a transverse direction, thereby preventing the light leakage components 24 from reaching the projection lens 20 and from affecting adversely the contrast and the quality of the output image from the projection lens 20.

The first light modulator 34 is disposed adjacent to the first dichroic beam splitter prism 33 so as to receive the first color component 21 therefrom. The first light modulator 34 modulates the first color component 21 and changes the polarization state of the first color component 21 from the S-polarization state to the P-polarization state when the first light modulator 34 is activated. The first light modulator 34 reflects the first color component 21 back to the first dichroic beam splitter prism 33. Even though the polarization state of the first color component 21 has changed, because the color thereof has not changed, the first color component 21 will be able to pass through the first dichroic beam splitter prism 33 so as to reach the polarization beam splitter prism 32.

The second dichroic beam splitter prism 35 has a first surface disposed adjacent to the fourth side of the polarization beam splitter prism 32, a second surface opposite to the first surface, and a third surface between the first and second surfaces. The second dichroic beam splitter prism 35 permits light of a predetermined color to pass therethrough, and reflects light of other colors. In this embodiment, the second dichroic beam splitter prism 35 receives the P-polarized second and third color components 22, 23 from the polarization beam splitter prism 32, permits the second color component 22 to pass through the second surface thereof, and reflects the third color component 23 in a transverse direction so as to pass through the third surface thereof.

Referring back to Figure 5, each of the second and third light modulators 36, 37 is disposed adjacent to a respective one of the second and third surfaces of the second dichroic beam splitter prism 35 so as to receive a corresponding one of the second and third color components 22, 23 therefrom. The second light modulator 36 modulates the second color component 22 and changes the polarization state of the second color component 22 from the P-polarization state to the S-polarization state when the second light modulator 36 is activated. The second light modulator 36 reflects the second color component 22 back to the second dichroic beam splitter prism 35. At this time, all of the reflected S-polarized second color component 22 will pass through the second dichroic beam splitter prism 35 and reach the fourth side of the polarization beam splitter prism 32.

Similarly, the third light modulator 37 modulates the third color component 23 and changes the polarization state of the third color component 23 from the P-polarization state to the S-polarization state when the third light modulator 37 is activated. The third light modulator 37 reflects the third color component 23 back to the second dichroic beam splitter prism 35. At this time, all of the reflected S-polarized third color component 23 will be directed by the second dichroic beam splitter prism 35 to the fourth side of the polarization beam splitter prism 32.

As shown in Figure 3, in view of the characteristics of the polarization beam splitter prism 32, a large portion (about 90%) of the P-polarized reflected first color component 21 that was reflected by the first light modulator 34 and that was received by the polarization beam splitter prism 32 from the first dichroic beam splitter prism 33 will be allowed to pass through the first side of the polarization beam splitter prism 32. A small portion (about 10%) of the P-polarized reflected first color component 21 will, however, be reflected by the polarization beam splitter prism 32 in a transverse direction to pass through the second side thereof, i.e. toward the polarization state converting device 31, thereby resulting in a light leakage component 211. The light leakage component 211 that is associated with the first color component 21 is thus prevented from reaching the projection lens 20 and from affecting adversely the contrast and the quality of the output image from the projection lens 20.

The light polarization selector 38, which is disposed between the first side of the polarization beam splitter prism 32 and the projection lens 20, receives the reflected first, second and third color components 21, 22, 23 from the polarization beam splitter prism 32, and changes the polarization state of the reflected first color component 21 from the P-polarization state back to the S-polarization state before the reflected first color component 21 reaches the projection lens 20.

The polarizer 39, which is disposed between the light polarization selector 38 and the projection lens 20, permits only pure S-polarized color components to pass therethrough, and absorbs P-polarized color components. The S-polarized first, second and third color components 21, 22, 23 from the polarizer 39 are recombined as they pass through the projection lens 20 for projecting a color image on a display screen (not shown).

Preferably, a quarter-wavelength plate (not shown) can be disposed between each of the first, second and third light modulators 34, 36, 37 and the adjacent one of the first and second dichroic beam splitter prisms 33, 35 for improved contrast.

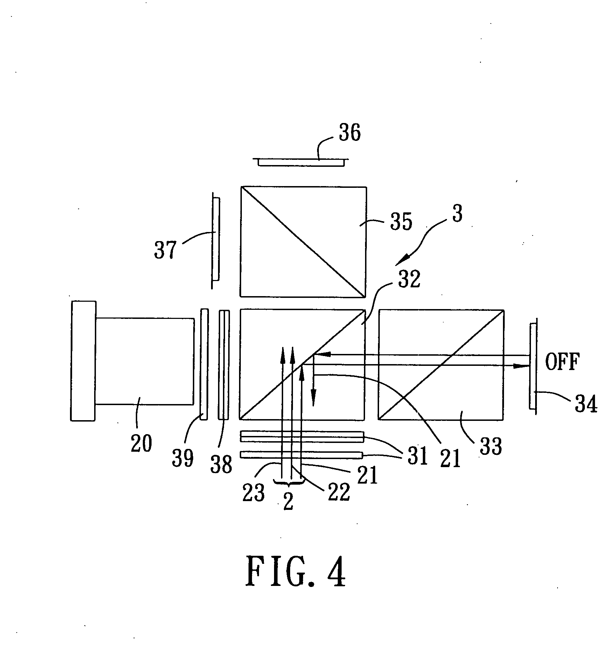

Referring to Figure 4, when the first light modulator 34 is deactivated, the first color component 21 will be reflected back to the first dichroic beam splitter prism 33 without altering its polarization state. The S-polarized first color component 21 will then pass through the first dichroic beam splitter 33 and reach the polarization beam splitter prism 32. The S-polarized first color component 21 will subsequently be reflected by the polarization beam splitter prism 32 to pass through the second side thereof, i.e. toward the polarization state converting device 31, so as to prevent the S-polarized first color component 21 from reaching the projection lens 20 and from affecting the output image from the projection lens 20.

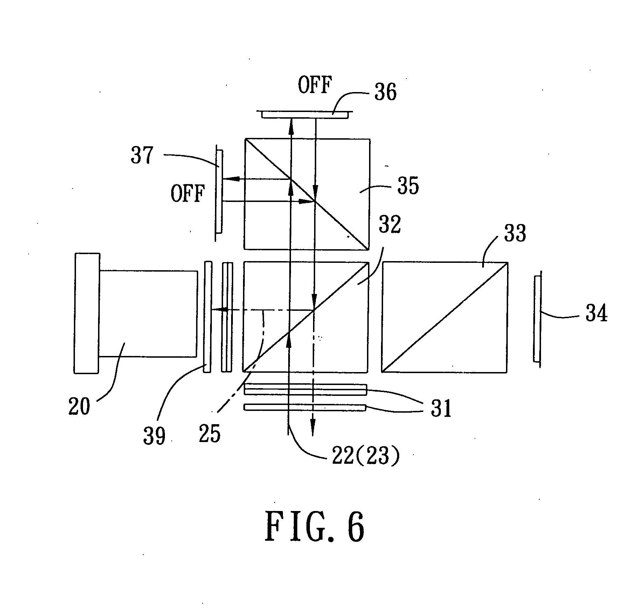

Referring to Figure 6, when the second light modulator 36 is deactivated, the P-polarized second color component 22 from the second dichroic beam splitter prism 35 will be reflected back to the same so as to reach the polarization beam splitter 32 without altering the polarization state of the second color component 22. In view of the characteristics of the polarization beam splitter prism 32, a large portion (about 90%) of the P-polarized second color component 22 from the second dichroic beam splitter prism 35 will be allowed to pass through the second side of the polarization beam splitter prism 32, i.e. toward the polarization state converting device 31, so as to be prevented from reaching the projection lens 20 and from thus affecting adversely the contrast and the quality of the output image from the projection lens 20. A small portion (about 10%) of the P-polarized second color component 22 from the second dichroic beam splitter prism 35 will, however, be reflected by the polarization beam splitter prism 32 in a transverse direction to pass through the first side thereof, i.e. toward the projection lens 20, to form a light leakage component 25. Because the polarizer 39 is disposed between the polarization beam splitter prism 32 and the projection lens 20, the P-polarized light leakage component 25 will be absorbed by the polarizer 39, thereby preventing the light leakage component 25 that is associated with the second color component 22 from reaching the projection lens 20 and from affecting the output image from the projection lens 20.

Similarly, when the third light modulator 37 is deactivated, the P-polarized third color component 23 from the second dichroic beam splitter prism 35 will be reflected back to the same so as to reach the polarization beam splitter 32 without altering the polarization state of the third color component 23. Thereafter, a large portion (about 90%) of the P-polarized third color component 23 from the second dichroic beam splitter prism 35 will be allowed to pass through the second side of the polarization beam splitter prism 32, i.e. toward the polarization state converting device 31, so as to be prevented from reaching the projection lens 20. A small portion (about 10%) of the P-polarized third color component 23 from the second dichroic beam splitter prism 35 will be reflected by the polarization beam splitter prism 32 in a transverse direction to pass through the first side thereof, i.e. toward the projection lens 20, to form the P-polarized light leakage component 25 that will be absorbed by the polarizer 39.

It has thus been shown that, by virtue of the polarization beam splitter prism 32 and the first and second dichroic beam splitter prisms 33, 35 in the projection display 3, the light leakage components 211, 24 that are associated with the first, second and third color components 21, 22, 23 and that are generated when the corresponding first, second and third light modulators 34, 36, 37 are activated can be prevented from reaching the projection lens 20 so as not to adversely affect the output image from the projection lens 20. Moreover, since activation of the first, second and third light modulators 34, 36, 37 depends upon the colors to be projected by the projection display 3 on the display screen (not shown) , the color component that is associated with the deactivated one of the light modulators 34, 36, 37 will be either directed away from the projection lens 20 or absorbed by the polarizer 39, thereby resulting in an enhanced output image quality from the projection lens 20.

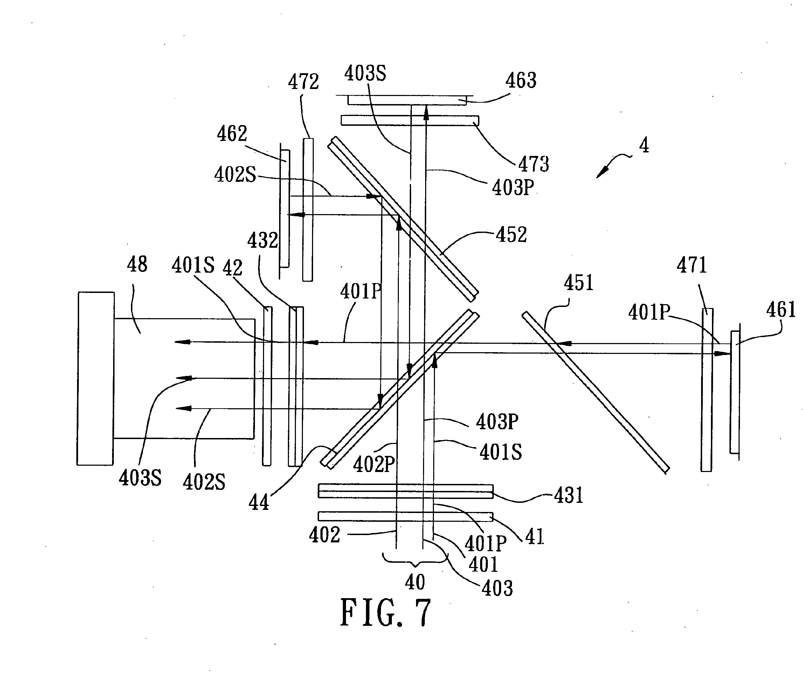

Referring to Figure 7, the second preferred embodiment of a projection display 4 according to the present invention is shown to include a first (P-polarization state) polarizer 41, a second (S-polarization state) polarizer 42, a first polarization state converter 431, a second polarization state converter 432, a polarization beam splitter 44, a first dichroic mirror 451, a second dichroic mirror 452, a first light modulator 461, a second light modulator 462, a third light modulator 463, and first, second and third optical path compensating plates 471, 472, 473. An input light beam 40 from an illuminating apparatus (not shown) is inputted from one side of the first polarizer 41 so that an output light beam can be provided to a projection lens 48. The input light beam 40 is generally white light that contains first, second and third color components 401, 402, 403, each of which has a first polarization state. In this embodiment, the first, second and third color components 401, 402, 403 are green, blue and red color components, respectively. The first, second and third color components 401, 402, 403 are processed by the first, second and third light modulators 461, 462, 463, respectively. For the sake of illustration, S-polarized first, second and third color components are respectively referred to as 401S, 402S, 403S, whereas the P-polarized first, second and third color components are respectively referred to as 401P, 402P, 403P.

In this embodiment, the first polarizer 41 permits only P-polarized color components to pass therethrough, and absorbs S-polarized color components. The second polarizer 42 permits only S-polarized color components to pass therethrough, and absorbs P-polarized color components. As shown in Figure 7, the first polarizer 41 is disposed on one side of the first polarization state converter 431 opposite to the polarization beam splitter 44, and permits the P-polarized first, second and third color components 401P, 402P, 403P to pass therethrough. The second polarizer 42 is disposed between the second polarization state converter 432 and the projection lens 48, and permits only S-polarized first, second and third color components 401S, 402S, 403S to pass therethrough so as to ensure the purity of the S-polarized color components 401S, 402S, 403S that reach the projection lens 48.

In this embodiment, the first and second polarization state converters 431, 432 are ColorSelect™ filter products from ColorLink Inc., and are disposed to receive the input light beam 40 and to convert the polarization state of a predetermined color component, for example, from the S-polarization state to P-polarization state or vice versa. In this embodiment, the first polarization state converter 431 is disposed on the optical path of the input light beam 40 passing through the first polarizer 41 to convert the P-polarization state of the first color component 401 to the S-polarization state, while the P-polarization state of the second and third color components 402, 403 that also pass therethrough remains unaltered.

The second polarization state converter 432, which is disposed between the polarization beam splitter 44 and the second polarizer 42, receives the first, second and third color components 401, 402, 403 via the polarization beam splitter 44, and converts the P-polarized first color component 401P into S-polarized first color component 401S before the latter reaches the second polarizer 42.

In this embodiment, the polarization beam splitter 44 is formed as a planar glass sheet, specifically a laminate of two glass lens pieces having a beam splitting film plated therebetween, that is capable of reflecting perpendicularly the S-polarized color components while permitting P-polarized color components to pass therethrough. The polarization beam splitter 44 is disposed between the first and second polarization state converters 431, 432 at a +45° angle relative to an optical axis of the projection lens 48 so as to receive the input light beam 40 from the first polarization state converter 431. As shown in Figure 7, the polarization beam splitter 44 is located above the first polarization state converter 431 and on the right side of the second polarization state converter 432. When the S-polarized first color component 401S and the P-polarized second and third color components 402P, 403P from the first polarization state converter 431 reach the polarization beam splitter 44, the S-polarized first color component 401S is reflected perpendicularly to the right, while the P-polarized second and third color components 402P, 403P pass upwardly through the polarization beam splitter 44, thereby separating the S-polarized first color component 401S from the P-polarized second and third color components 402P, 403P.

The first and second dichroic mirrors 451, 452 are both planar plates of glass, each of which is formed by a stack of laminates of different refractive indices. The material, thickness, and number of the laminates can be controlled to enable an incident light beam to pass therethrough or to be reflected thereby within a determined range of wavelengths such that color components of different wavelengths can be made to pass therethrough or to be reflected thereby. Besides, the first and second dichroic mirrors 451, 452 can be disposed at an inclined angle according to the path of the light beam. Certainly, during manufacture, each of the first and second dichroic mirrors 451, 452 may be formed as a planar glass sheet having one side coated with a beam splitting layer, or a planar laminate of two glass lens pieces bonded together and having a beam splitting film sandwiched therebetween. In this embodiment, both of the first and second dichroic mirrors 451, 452 are disposed at a -45° angle relative to the optical axis of the projection lens 48. The first dichroic mirror 451 is disposed on the right side of the polarization beam splitter 44 while the second dichroic mirror 452 is disposed above the polarization beam splitter 44 such that the S-polarized first color component 401S from the polarization beam splitter 44 reaches the first dichroic mirror 451 whereas the P-polarized second and third color components 402P, 403P from the polarization beam splitter 44 reach the second dichroic mirror 452. The first dichroic mirror 451 permits the S-polarized first color component 401S to pass rightward therethrough and reflects the other color components perpendicularly downward. The second dichroic mirror 452 permits the P-polarized third color component 403P to pass upwardly therethrough and reflects the P-polarized second color component 402P perpendicularly to the left, thereby separating the P-polarized second color component 402P from the P-polarized third color component 403P.

The first, second and third light modulators 461, 462, 463 are preferably reflective light valves. Upon receiving the first, second and third color components 401, 402, 403 and when activated, the first, second and third light modulators 461, 462, 463 modulate the first, second and third color components 401, 402, 403, respectively, and change the polarization states thereof for subsequent reflection in opposite directions. As shown in Figure 7, the first light modulator 461 is disposed adjacent to the first dichroic mirror 451 on the optical path of the first color component 401 so as receive the S-polarized first color component 401S from the first dichroic mirror 451. The first light modulator 461 modulates the S-polarized first color component 401S, changes the polarization state thereof back to the P-polarization state, and reflects the P-polarized first color component 401P in an opposite direction back to the first dichroic mirror 451.

The second light modulator 462 is disposed adjacent to the second dichroic mirror 452 on the optical path of the second color component 402 so as to receive the P-polarized second color component 402P from the second dichroic mirror 452. The second light modulator 462 modulates the P-polarized second color component 402P, changes the polarization state thereof back to the S-polarization state, and reflects the S-polarized second color component 402S in an opposite direction back to the second dichroic mirror 452.

The third light modulator 463 is disposed adjacent to the second dichroic mirror 452 on the optical path of the third color component 403 so as to receive the P-polarized third color component 403P therefrom. The third light modulator 463 modulates the P-polarized third color component 403P, changes the polarization state thereof back to the S-polarization state, and reflects the S-polarized third color component 403S in an opposite direction back to the second dichroic mirror 452.

The polarization beam splitter 44 receives from the first dichroic mirror 451 the P-polarized first color component 401P reflected by the first light modulator 461, further receives from the second dichroic mirror 452 the S-polarized second and third color components 402S, 403S reflected by the second and third light modulators 462, 463, and directs the same to the projection lens 48.

The first, second and third optical path compensating plates 471, 472, 473 are respectively disposed adjacent to the first, second and third light modulators 461, 462, 463 on the optical path of a respective color component. That is, the first optical path compensating plate 471 is disposed between the first dichroic mirror 451 and the first light modulator 461, whereas the second and third optical path compensating plates 472, 473 are disposed between the second dichroic mirror 452 and the respective one of the second and third light modulators 462, 463. The first, second and third optical path compensating plates 471, 472, 473 compensate the optical path of the respective one of the first, second and third color components 401, 402, 403 or any phase difference thereof so that the first, second and third color components 401, 402, 403, which travel along different optical paths after being split by the polarization beam splitter 44, have equal phase differences or uniform optical path lengths measured from the first polarization state converter 431 to the projection lens 48.

In use, when the first, second and third color components 401, 402, 403 are projected onto the first polarizer 41, the P-polarized first color component 401P is allowed to pass through the first polarizer 41, and is converted into the S-polarized first color component 401S upon passage through the first polarization state converter 431. The S-polarized first color component 401S is projected toward the polarization beam splitter 44, and is reflected thereby for successive passage through the first dichroic mirror 451 and the first optical path compensating plate 471 before reaching the first light modulator 461. The first light modulator 461 modulates the S-polarized first color component 401S, changes the polarization state thereof to the P-polarization state, and reflects the P-polarized first color component 401P in an opposite direction. The P-polarized first color component 401P passes successively through the first optical path compensating plate 471, the first dichroic mirror 451, and the polarization beam splitter 44 to reach the second polarization state converter 432. Upon passage through the second polarization state converter 432, the polarization state of the P-polarized first color component 401P is converted back to the S-polarization state. The S-polarized first color component 401S subsequently passes through the second polarizer 42 so as to have a purer polarization state prior to reaching the projection lens 48.

When the second color component 402 is projected onto the first polarizer 41, the P-polarized second color component 402P is allowed to pass through the first polarizer 41, the first polarization state converter 431, and the polarization beam splitter 44. When the P-polarized second color component 402P reaches the second dichroic mirror 452, it is reflected toward the left so as to pass through the second optical path compensating plate 472 and reach the second light modulator 462. The second light modulator 462 modulates the P-polarized second color component 402P, changes the polarization state thereof to the S-polarization state, and reflects the S-polarized second color component 402S in an opposite direction for subsequent passage through the second optical path compensating plate 472 and so as to reach the second dichroic mirror 452. The second dichroic mirror 452 reflects the S-polarized second color component 402S toward the polarization beam splitter 44, which directs the S-polarized second color component 402S to pass successively through the second polarization state converter 432 and the second polarizer 42 before reaching the projection lens 48.

When the third color component 403 is projected onto the first polarizer 41, the P-polarized third color component 403P passes through the first polarizer 41 and the first polarization state converter 431, and further through the polarization beam splitter 44, the second dichroic mirror 452, and the third optical path compensating plate 473. When the P-polarized third color component 403P reaches the third light modulator 463, the third light modulator 463 changes the polarization state thereof to the S-polarization state, and reflects the S-polarized third color component 403S in an opposite direction for passage through the third optical path compensating plate 473 and the second dichroic mirror 452 and so as to reach the polarization beam splitter 44. The polarization beam splitter 44 directs the S-polarized third color component 403S to pass successively through the second polarization state converter 432 and the second polarizer 42 before reaching the projection lens 48.

It is noted that different optical path lengths and phase differences may arise since the polarization beam splitter 44 and the first and second dichroic mirrors 451, 452 are in the form of planar plates. The present invention employs optical path compensating plates to forestall any such problems. Certainly, if the planar plates have a small thickness and the optical path length and/or phase differences are insignificant, the optical path compensating plates can be dispensed with.

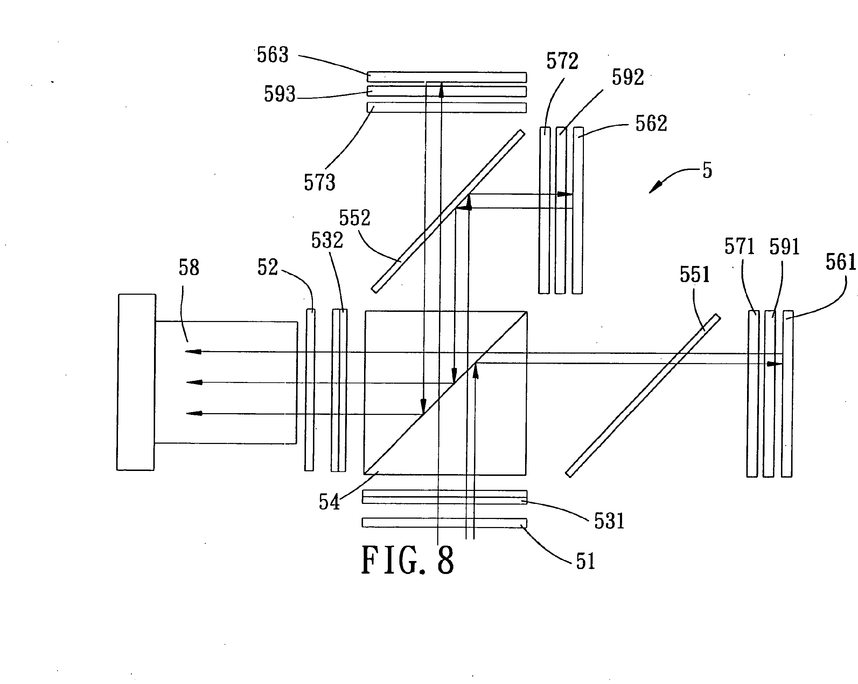

Referring to Figure 8, the third preferred embodiment of a projection display 5 according to the present invention is substantially similar to the previous embodiment in construction, and is shown to include first and second polarizers 51, 52, first and second polarization state converters 531, 532, a polarization beam splitter 54, first and second dichroic mirrors 551, 552, first, second and third light modulators 561, 562, 563, and first, second and third optical path compensating plates 571, 572, 573. The difference between this embodiment and the second preferred embodiment resides in that the polarization beam splitter 54 is not formed as a planar plate but is constructed from two right-angled prisms that are bonded together to form an inclined beam splitting interface. Besides, the first and second dichroic mirrors 551, 552 are both disposed at a +45° angle relative to an optical axis of a projection lens 58, and the second optical path compensating plate 572 and the second light modulator 562 are disposed on the right side of the second dichroic mirror 552 to match the angle of a plated refractive film of the second dichroic mirror 552. In addition, this embodiment further includes first, second and third quarter-wavelength plates 591, 592, 593, each of which is disposed between a respective one of the first, second and third optical path compensating plates 571, 572, 573, and the adjacent one of the first, second and third light modulators 561, 562, 563, for improved contrast.

Certainly, the polarization beam splitter 54 of the third preferred embodiment can be in the form of a planar plate as in the second preferred embodiment, and quarter-wavelength plates can be included in the second preferred embodiment.

It is noted that the optical components, such as the polarization beam splitter and the dichroic mirrors, as used in the present invention, may be in the form of a planar glass sheet or a film-plated planar plate. Moreover, in order to match the inclinedly-disposed planar plates, optical path compensating plates may be provided to ensure uniform optical path lengths and phase differences of the color components. The planar plates, aside from being compact and light, are easy and inexpensive to manufacture. In use, the projected color components are pure to ensure a high quality image output.

## Claims

1. A projection display (3, 4, 5) adapted to process an input light beam (2, 40) and to provide an output light beam to a projection lens (20, 48, 58), the input light beam (2, 40) including first, second and third color components (21, 22, 23, 401, 402, 403), each of which has a first polarization state, **characterized by**:
a first polarization state converter (312, 431, 531) adapted to receive the input light beam (2, 40) and to convert the polarization state of the first color component (21, 401) to a second polarization state different from the first polarization state;
a polarization beam splitter (32, 44, 54) disposed adjacent to said first polarization state converter (312, 431, 531) so as to receive the input light beam (2, 40) therefrom, said polarization beam splitter (32, 44, 54) separating the first color component (21, 401) from the second and third color components (22, 23, 402, 403);
a first dichroicbeam splitter (33, 451, 551) disposed adjacent to said polarization beam splitter (32, 44, 54) and permitting the first color component (21, 401) to pass therethrough;
a first light modulator (34, 461, 561) disposed adjacent to said first dichroic beam splitter (33, 451, 551) and receiving the first color component (21, 401) therefrom, said first light modulator (34, 461, 561) modulating the first color component (21, 401) and changing the polarization state of the first color component (21, 401) back to the first polarization state when activated, said first light modulator (34, 461, 561) reflecting the first color component (21, 401) back to said first dichroic beam splitter (33, 451, 551);
a second dichroic beam splitter (35, 452, 552) disposed adjacent to said polarization beam splitter (32, 44, 54) and receiving the second and third color components (22, 23, 402, 403) therefrom, said second dichroic beam splitter (35, 452, 552) separating the second color component (22, 402) from the third color component (23, 403);
a second light modulator (36, 462, 562) disposed adjacent to said second dichroic beam splitter (35, 452, 552) and receiving the second color component (22, 402) therefrom, said second light modulator (36, 462, 562) modulating the second color component (22, 402) and changing the polarization state of the second color component (22, 402) to the second polarization state when activated, said second light modulator (36, 462, 562) reflecting the second color component (22, 402) back to said second dichroic beam splitter (35, 452, 552); and
a third light modulator (37, 463, 563) disposed adjacent to said second dichroic beam splitter (35, 452, 552) and receiving the third color component (23, 403) therefrom, said third light modulator (37, 463, 563) modulating the third color component (23, 403) and changing the polarization state of the third color component (23, 403) to the second polarization state when activated, said third light modulator (37, 463, 563) reflecting the third color component (23, 403) back to said second dichroic beam splitter (35, 452, 552);
said polarization beam splitter (32, 44, 54) receiving from said first dichroic beam splitter (33, 451, 551) the first color component (21, 401) reflected by said first light modulator (34, 461, 561), further receiving from said second dichroic beam splitter (35, 452, 552) the second and third color components (22, 23, 402, 403) reflected by said second and third light modulators (36, 37, 462, 463, 562, 563), and being adapted to direct the first, second and third color components (21, 22, 23, 401, 402, 403) received from said first and second dichroic beam splitters (33, 35, 451, 452, 551, 552) to the projection lens (20, 48, 58).

2. The projection display (3, 4, 5) as claimed in Claim 1, further **characterized by** a second polarization state converter (38, 432, 532) adapted to be disposed between said polarization beam splitter (32, 44, 54) and the projection lens (20, 48, 58), said second polarization state converter (38, 432, 532) receiving the first, second and third color components (21, 22, 23, 401, 402, 403) to be directed by said polarization beam splitter (32, 44, 54) to the projection lens (20, 48, 58), and converting the polarization state of the first color component (21, 401) to result in the output light beam, wherein the first, second and third color components (21, 22, 23, 401, 402, 403) of the output light beam have the second polarization state.

3. The projection display (3, 4, 5) as claimed in Claim 2, further **characterized by** a polarizer (39, 42, 52) adapted to be disposed between said second polarization state converter (38, 432, 532) and the projection lens (20, 48, 58), said polarizer (39, 42, 52) being adapted to absorb light that has the first polarization state and to permit light that has the second polarization state to pass therethrough.

4. The projection display (4, 5) as claimed in Claim 1, further **characterized by** first, second and third optical path compensating plates (471, 472, 473, 571, 572, 573), each of which is disposed adjacent to a respective one of said first, second and third light modulators (461, 462, 463, 561, 562, 563), thereby ensuring that the first, second and third color components (21, 22, 23, 401, 402, 403) have uniform optical path lengths measured from said first polarization state converter (431, 531) to the projection lens (48, 58).

5. The projection display (5) as claimed in Claim 4, further **characterized by** first, second and third quarter-wavelength plates (591, 592, 593), each of which is disposed between a respective one of said first, second and third optical path compensating plates (571, 572, 573), and the adjacent one of said first, second and third light modulators (561, 562, 563).

6. The projection display (3, 4, 5) as claimed in Claim 1, further **characterized by** a polarizer (311, 41, 51) disposed on one side of said first polarization state converter (312, 431, 531) opposite to said polarization beam splitter (32, 44, 54), and adapted to absorb light that has the second polarization state and to permit light that has the first polarization state to pass therethrough.

7. The projection display (3) as claimed in Claim 1, **characterized in that** each of said first and second dichroic beam splitters (33, 35) is formed as a prism.

8. The projection display (4, 5) as claimed in Claim 1, **characterized in that** each of said first and second dichroic beam splitters (451, 452, 551, 552) is formed as a dichroic mirror.

9. The projection display (3, 5) as claimed in Claim 1, **characterized in that** said polarization beam splitter (32, 54) is formed as a prism.

10. The projection display (4) as claimed in Claim 1, **characterized in that** said polarization beam splitter (44) is formed as a planar plate that is disposed at an angle relative to an optical axis of the projection lens (48).
